# EUROPEAN PATENT SPECIFICATION

(11) **EP 1 232 913 B1**
(45) Date of publication and mention of the grant of the patent: **01.09.2004**
(21) Application number: 02002893.2
(22) Date of filing: 08.02.2002
(51) Int. Cl.: B60R 16/02, H01R 13/703

(54) **Power supply system inside an automobile**
Einrichtung zur Stromversorgung in einem Kraftfahrzeug
Dispositif d'alimentation d'un reseau éléctrique de véhicule automobile

(30) Priority: 09.02.2001 JP 2001033526
(43) Date of publication of application: 21.08.2002
(73) Proprietor: AUTONETWORKS TECHNOLOGIES, LTD., Nagoya-shi, Aichi (JP); SUMITOMO WIRING SYSTEMS, Ltd., Yokkaichi-shi, Mie (JP); SUMITOMO ELECTRIC INDUSTRIES, LTD., Osaka-shi, Osaka (JP)
(72) Inventor: Ueno, Hiroto, c/o AutoNetworks Technologies, Ltd., Nagoya-shi, Aichi (JP); Kurimoto, Naoya, c/o Sumitomo Wiring Systems, Ltd., Yokkaichi-shi, Mie (JP)
(74) Representative: Winter, Brandl, Fürniss, Hübner, Röss, Kaiser, Polte Partnerschaft

(56) References cited:
- EP-A- 0 929 090
- GB-A- 2 199 704
- US-A- 1 470 824

## Description

### BACKGROUND OF THE INVENTION

This invention relates to a power supply system inside an automobile in which a connector is provided in a power supply circuit inside an automobile and electric power can be supplied to loads or cut off by connection or disconnection of the connector.

An electric circuit inside an automobile is constituted by a wire harness, and its wire harness is connected through many connectors. In its electric circuit, under the state where the electric current is flowing, when the connector provided in its circuit is disconnected (removed) because of repair and maintenance, arc may be produced between terminals. The production of this arc may cause meltage of the terminal, and some bad influence may be given onto loads.

From viewpoints of safety and economy of automobile, there is a tendency to change its power supply circuit from a traditional 14V power system to a high voltage power supply system such as a 42V power system.

The higher a voltage of the electric circuit is, the more violently the above arc is produced, so that it is necessary to prevent the production of the arc.

Thereto US 1 470 824 A discloses an electrical connector in which an electrical circuit is closed/broken after/before a switch frame snapped, thereby making/breaking an electrical contact mechanically.

US 6 056 592 A discloses a power supply system according to the preambel of claim 1 in which a switching device interrups power supply from a current circuit if a short-cut circuiting terminal is disengaged from a switching connector.

In US 6 056 592 A said switching device is not controlled but autonomous so that the disclosed power supply system cannot be used as a circuit breaker in case of emergency.

Thus it is in an object of the present invention to provide a power supply system which can be used as a circuit breaker in case of emergency.

Said object is solved by the subject-matter of claim 1. According to the present invention an electronic control unit controls a switching means to cut off a power supply to connection terminals before said connection terminals are disconnected. Thus according to this invention, before connection terminals in a connector are disconnected, connectionof a power supply to its terminal is cut, and thereafter the connector is disconnected.

Since the electric current is not flowing in the terminals in the connector at the disconnecting time, the arc is not produced at the disconnecting time. Therefore, meltage of the terminal caused by disconnection of the connector and disadvantage of loads are not produced.

As a mode for carrying out the invention, in a power supply system inside automobile in which a connector is provided in a power supply circuit inside an automobile and electric power can be supplied to loads or cut off by connection or disconnection of the connector, such a constitution can be adopted that before connection terminals in the connector are disconnected, connection of a power supply to the terminal is cut, and thereafter the connector is disconnected.

Specifically, the connector is so constituted that a lever member is rotatably provided for one of a pair of connector housings; a member that fits to the lever member is provided for the other of them; and as the lever member rotates, a fitting point of the lever member and the fitting member approaches gradually a rotational center of the lever member, and then the both connector housings are connected and coupled to each other. In this connector, when the lever member rotates at a predetermined angle in a direction where the connection and coupling state of the connector housings is released, the connection of the power supply to the terminal is cut off. As more concrete constitution of the connector, the constitution described in the Unexamined Japanese Patent Application Publication No Hei 4-56084 is adopted. In this case, a connector connection detecting circuit detects disconnection of the connection terminals in the connector, and shuts off a power supply circuit by its detection signal. It is good to perform this action by an ECU (electronic control unit).

However, control by the ECU is not limited to only the connector described in this Published Unexamined Patent Application. Namely, the ECU inside the automobile can detect disconnection of connection terminals in various connectors, and can shut off a power supply circuit to each connector by its detection signal.

The subjects of the above connector are all the connectors provided in the power supply circuit. In case of a connector that is nearest to a power supply such as a battery, power supply from its power supply to all the electric devices can be cut off by disconnection of the connection terminals in its connector . At this time, its connector can be provided for the battery.

### BRIEF DESCRIPTION OF THE DRAWINGS

[Fig. 1]

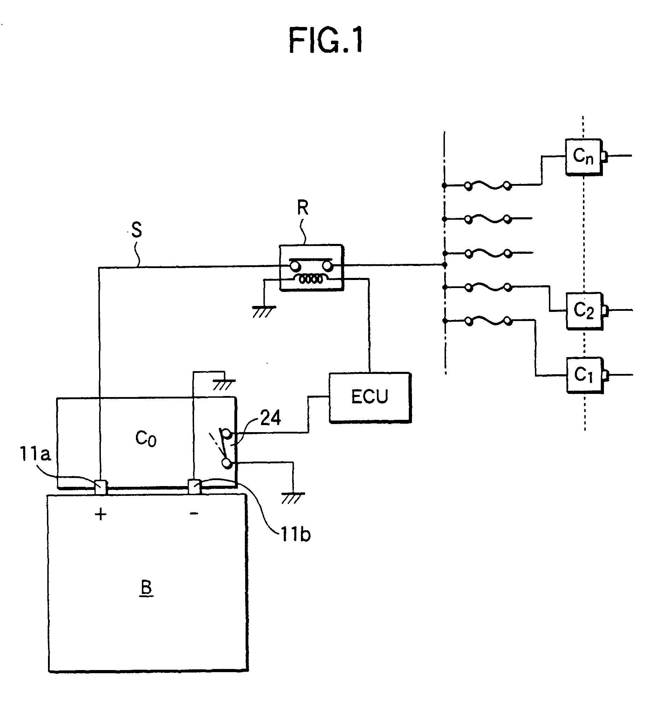

   Fig. 1 is a schematic circuit diagram in one embodiment.
[Fig. 2]

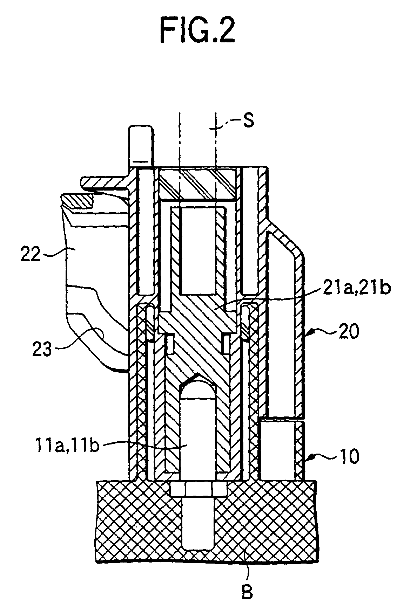

   Fig. 2 shows one example of a connector in the embodiment, and it is a sectional view in a fitting connection state of the connector.
[Fig. 3]

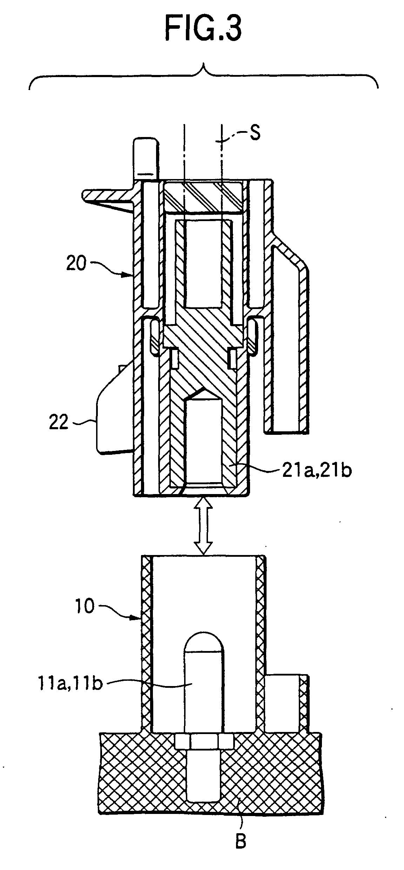

   Fig. 3 is a diagram showing the fitting connection of the connector.
[Fig. 4]

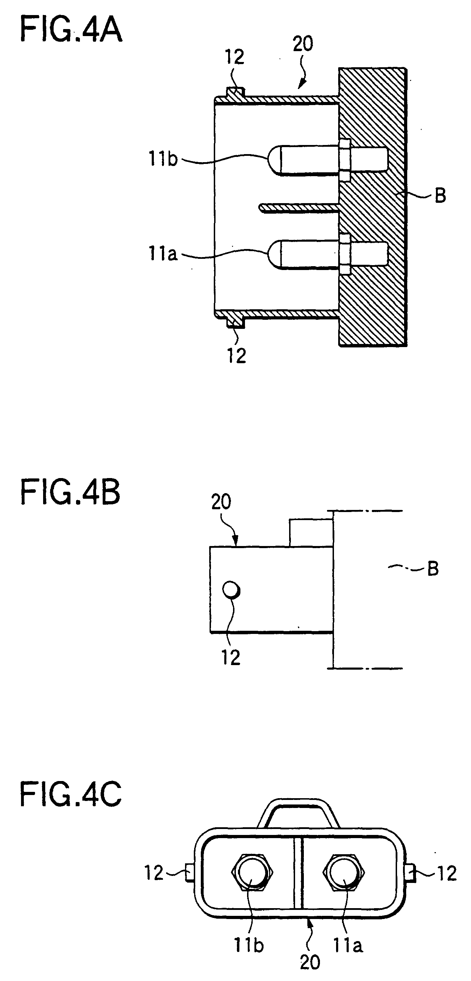

   Fig. 4A is a cut plan view of a connector housing on a male terminal side of the connector;
   Fig. 4B is a front view of the connector housing in Fig. 4A;
   Fig. 4C is a left side view of the connector housing in Fig. 4A.
[Fig. 5]
   Fig. 5A is a plan view of a connector housing on a female terminal side of the connector;

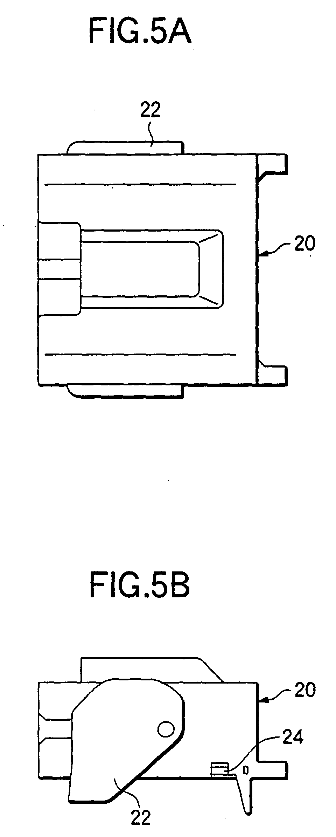

   Fig. 5B is a front view of the connector housing in Fig. 5A;

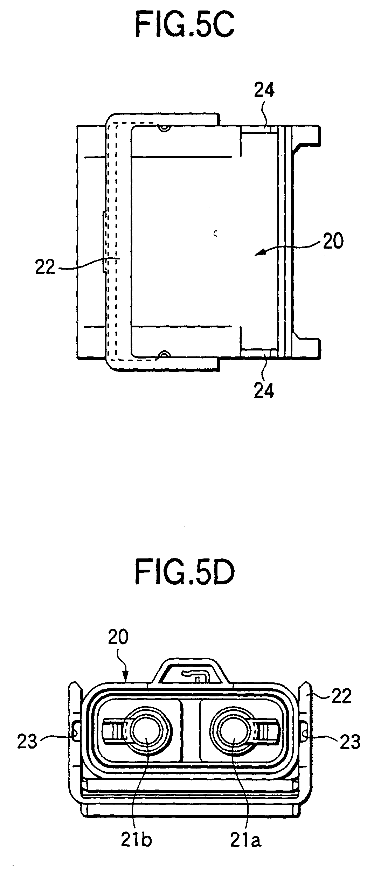

   Fig. 5C is a bottom view of the connector housing in Fig. 5A;
   Fig. 5D is a left side view of the connector housing in Fig. 5A;

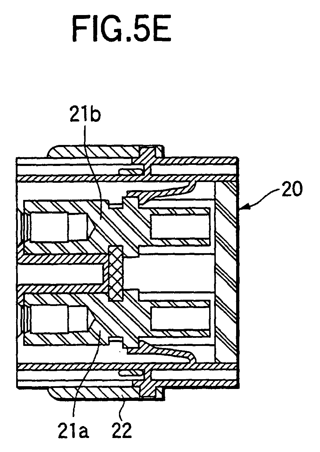

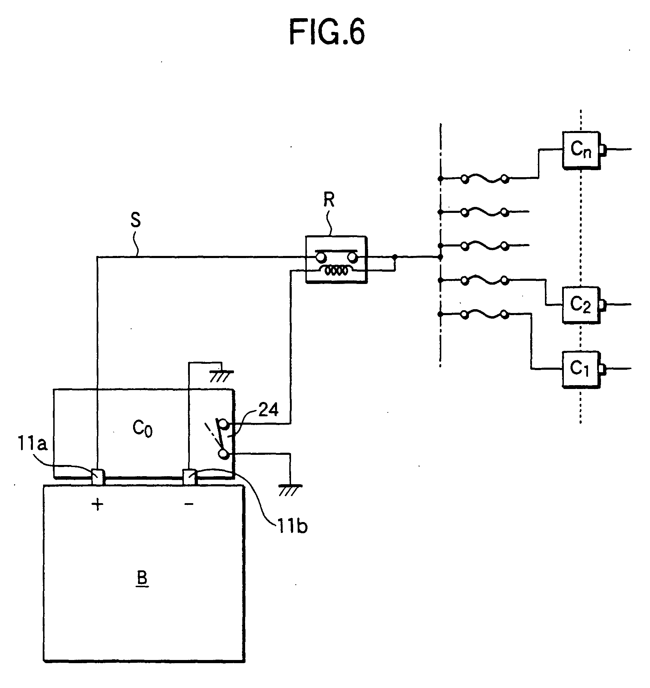

   Fig. 5E is a cut plan view of the connector housing in Fig. 5A.

### DETAILED DESCRIPTION OF THE PREFERRED EMBODIMENTS

Figs. 1 to 5 show one embodiment of the invention. In this embodiment, regarding an arc preventing system in a battery connector, a 42V battery B is used as a mounted battery, and a main connector C₀ is fixed to this battery B. In a power supply circuit S from this main connector C₀, a cut-off relay R is provided and thereafter various loads (not shown) are connected through sub-connectors C₁ to Cₙ.

The main connector C₀, as shown in Figs. 2 to 5, is composed of a pair of connector housings 10 and 20 similarly to the connector described in Published Unexamined Patent Application No. Hei 4-56084. One of them, the housing 10 is formed integrally with a case of the battery B and has positive and negative power supply terminals 11a, 11b of its battery (refer to Fig. 4A to 4C) . The other housing 20, as shown in Figs . 5A to 5E, has female terminals 21a, 21b therein, and an arm 22 functioning as a lever member is rotatably provided on an outer side surface of the housing 20. A groove 23 extending backward from a center of the front surface toward a rotational center is formed in a side portion of this arm 22. When the both housings 10, 20 are placed opposite to each other (from a state shown in Fig. 3 to a state shown in Fig. 2), a pin (fitting member) 12 on a side surface of one housing fits to its groove 23, and thereafter the arm 22 is rotated, the both housings 10, 20 approach each other while the pin 12 is sliding in the groove 23 with its rotation and fit to each other, so that the terminals 11a, 11b are fitted and connected to the terminals 21a, 21b (refer to Fig. 2 and the above Published Unexamined Patent Application) . When the arm 22 rotates at 90 degrees as shown in Fig. 2, its fitting connection is completed. On the other hand, until the arm 22 rotates reversely at about 90 degrees from this completion state, the both housings 10, 20 cannot be separated.

On both side surfaces of the other connector housing 20, contacts 24 are provided. When this contact 24 is covered with the arm 22, it comes into contact with a contact inside the arm (state shown by a solid line in Fig. 1 and state shown in Fig. 2). On the other hand, when the arm 22 rotates at about 20 degrees in the separating direction under the state where the fitting connection of the both housings 10, 20 is completed, covering of the contact 24 with the arm 22 is released, so that the contact 24 separates from the contact of the arm 22 (state shown by a chain line in Fig. 1). At this time, the rotation of the arm 22 does not give the separating operation to the both terminals 11a, 11b and 21a, 21b.

This contact 24 is connected to the ECU. The ECU, as soon as the contact 24 separates from the contact of the arm 22, detects this separation and actuates the cut-off relay R thereby to shut off a power supply circuit S. Therefore, when the arm 22 is further rotated to separate the both housings 10, 20 (when the connection of the both terminals 11a, 11b and 21a, 21b is cut off) , its separation is performed in a state where the electric current is not flowing in the power supply circuit S, so that arc is not produced between the terminals 11a, 11b and the terminals 21a, 21b. In case that the contacts 24 are thus provided on the both side surfaces, the both contacts 24 are connected in series. The both contacts 24 come into contact with the contact of the arm 22, whereby completion of the fitting connection of the both housings 10, 20 is confirmed. The contact 24 may be provided on only one side surface. The rotational angle of the arm 22 at which the contact 24 separates from the contact of the arm 22 is arbitrary within a range where the ON/OFF (separation) operation can be performed surely.

In this embodiment, since the ECU controls the cut-off relay R, as long as the ECU makes the relay R off by off of an ignition thereby to cut off the power supply to each load and includes a collision sensor, the ECU can cut off the power supply to each load by making the relay R off on the basis of the detection signal, whereby it is possible to prevent disadvantage such as a fire of the load due to continuation of the power supply. Namely, according to various data that can be obtained, the ECU can make the relay R off and can suitably cut off the power supply to the load.

Also, for each sub-connector C₁ to Cₙ, mechanism that cuts off the power supply connected to the connectors C₁ to Cₙ on the basis of the separating operation may be provided similarly to the main connector C₀. In this case, the mechanism by the lever member similar to that in the above Published Unexamined Patent Application can be adopted.

As described above, according to the invention, before the connection terminals accommodated in the connector are disconnected, the connection of the power source to the terminal is cut off. Therefore, cutting-off of the terminal connection is performed in a state where the electric current is cut off, so that arc is not produced between the terminals, meltage of the terminal is not also produced, and disadvantage of the load is not also produced.

## Claims

1. A power supply system inside automobile comprising:
a connector (C0) provided in a power supply circuit (S) inside an automobile, connection terminals (11a, 11b, 21a, 21b) for connecting or disconnecting so that loads is supplied by electric power or is cut off,
switching means (R) provided on said power supply circuit (S),
contacting means (24) provided on said connector (C0) and connected to said switching means (R), wherein
before said connection terminals (11a, 11b, 21a, 21b) accommodated in said connector (C0) are disconnected, connection of a power supply to said connection terminals (11a, 11b, 21a, 21b) is cut off by said switching means (R), and then said connector (C0) is disconnected,
**characterized in that**
the contacting means (24) are connected to an electronic control unit (ECU) that controls said switching means (R).

2. The power supply system inside automobile according to Claim 1, wherein
said connector is taken as a connector that is nearest to a power source B, and
by disconnecting said terminals in said connector, a power supply from said power source B to all electrical devices is cut off.

3. The power supply system inside automobile according to Claim 2, wherein
said connector is provided for a battery B.

4. The power supply system inside automobile according to Claim 1, wherein
a lever member 22 is rotatably provided for one of a pair of connector housings 10 and 20 of said connector;
a member 12 that fits to said lever member is provided for the other of said housings;
as said lever member 22 rotates, a fitting point of said lever member 22 and said fitting member 12 approaches gradually a rotational center of said lever member 22, and then said both connector housings 10 and 20 are connected to be coupled to each other; and
when said lever member 22 rotates at a predetermined angle in a direction where the connection and coupling state of said connector housings is released, the connection of said power supply to said terminal is cut off.

## Patentansprüche

1. System zur Versorgung mit Leistung innerhalb eines Automobils, welches umfaßt:
einen Stecker (C₀), der in einem Leistungsversorgungsschaltkreis (S) innerhalb eines Automobils angeordnet ist,
Verbindungsanschlüsse (11a, 11b, 21a, 21b) zum Verbinden oder Trennen, so daß Lasten mit elektrischer Energie versorgt oder von dieser getrennt werden können,
Schaltmittel (R), das in dem Leistungsversorgungsschaltkreis (S) angeordnet ist,
Kontaktmittel (24), das auf dem Stecker (C₀) angeordnet ist und mit dem Schaltmittel (R) verbunden ist, wobei
bevor die Verbindungsanschlüsse (11a, 11b, 21a, 21b), die in dem Stecker (C₀) angeordnet sind, getrennt werden, die Verbindung einer Leistungsversorgung mit den Verbindungsanschlüssen (11a, 11b, 21a, 21b) durch das Schaltmittel (R) getrennt wird, und dann der Stecker (C₀) getrennt wird,
**dadurch gekennzeichnet, daß**
das Kontaktmittel (24) mit einer elektronischen Kontrolleinheit (ECU) verbunden ist, die das Schaltmittel (R) kontrolliert.

2. System zur Versorgung mit Leistung innerhalb eines Automobils gemäß Anspruch 1, **dadurch gekennzeichnet, daß**
der Stecker als ein Stecker genommen ist, der am nächsten zu einer Leistungsquelle B ist, und
eine Leistungsversorgung von der Leistungsquelle B an alle elektrischen Vorrichtungen durch das Trennen der Anschlüsse in dem Stecker abgeschaltet wird.

3. System zur Versorgung mit Leistung innerhalb eines Automobils nach Anspruch 2, **dadurch gekennzeichnet, daß**
der Stecker für eine Batterie (B) vorgesehen ist.

4. System zur Versorgung mit Leistung innerhalb eines Automobils nach Anspruch 1, **dadurch gekennzeichnet, daß**
ein Hebelglied (22) drehbar an einem von einem Paar Steckergehäusen (10) und (20) des Steckers angeordnet ist;
ein Glied (12), das mit dem Hebelglied zusammenpaßt, an dem anderen Gehäuse angeordnet ist;
wenn das Hebelglied (22) sich dreht, ein Befestigungspunkt des Hebelgliedes (22) und des Befestigungsgliedes (12) sich allmählich einem Rotationszentrum des Hebelgliedes (22) nähert, und dann die beiden Steckergehäuse (10) und (20) verbunden werden, so daß sie aneinander gekoppelt sind; und
wenn sich das Hebelglied (22) um einen vorbestimmten Winkel in einer Richtung dreht, in der die Verbindung und der gekoppelte Zustand der Steckergehäuse freigegeben wird, die Verbindung der Leistungsversorgung mit dem Anschluß abgeschaltet wird.

## Revendications

1. Système d'alimentation d'un réseau électrique de véhicule automobile, comprenant :
un connecteur (CO) placé dans un circuit d'alimentation (S) d'un réseau électrique de véhicule automobile, des bornes de connexion (11a, 11b, 21a, 21b) destinées à connecter ou déconnecter pour que des charges reçoivent l'alimentation électrique ou soient débranchées ;
un moyen de commutation (R) placé sur ledit circuit d'alimentation (S) ;
un moyen de contact (24) placé sur ledit connecteur (CO) et connecté audit moyen de commutation (R) ; dans lequel
avant que lesdites bornes de connexion (11a, 11b, 21a, 21b) contenues dans ledit connecteur (CO) soient déconnectées, la connexion d'une alimentation auxdites bornes de connexion (11a, 11b, 21a, 21b) est débranchée par ledit moyen de commutation (R), et puis ledit connecteur (CO) est déconnecté ;
**caractérisé en ce que**
les moyens de contact (24) sont connectés à une unité de commande électronique (ECU) qui commande ledit moyen de commutation (R).

2. Système d'alimentation d'un réseau électrique de véhicule automobile selon la revendication 1, dans lequel :
ledit connecteur est pris comme un connecteur qui est le plus proche d'une source d'alimentation B ; et
en déconnectant lesdites bornes dans ledit connecteur, une alimentation de ladite source d'alimentation B à tous les dispositifs électriques est débranchée.

3. Système d'alimentation d'un réseau électrique de véhicule automobile selon la revendication 2, dans lequel :
ledit connecteur est fourni pour une batterie B.

4. Système d'alimentation d'un réseau électrique de véhicule automobile selon la revendication 1, dans lequel :
un élément de levier 22 est prévu de façon tournante pour l'un d'une paire de boîtiers de connecteur 10 et 20 dudit connecteur ;
un élément 12 qui s'adapte audit élément de levier est prévu pour l'autre desdits boîtiers ;
quand ledit élément de levier 22 tourne, un point d'insertion dudit élément de levier 22 et dudit élément d'insertion 12 approche progressivement d'un centre de rotation dudit élément de levier 22, et puis lesdits deux boîtiers de connecteurs 10 et 20 sont connectés pour être couplés l'un à l'autre ; et
lorsque ledit élément de levier 22 tourne à un angle prédéterminé dans une direction où la connexion et l'état de couplage desdits boîtiers de connecteur est libéré, la connexion de ladite alimentation à ladite borne est débranchée.
